# EUROPÄISCHE PATENTANMELDUNG

(11) **EP 1 236 981 A1**
(43) Veröffentlichungstag der Anmeldung: **04.09.2002**
(21) Anmeldenummer: 00122061.5
(22) Anmeldetag: 11.10.2000
(51) Int. Cl.: G01J 3/04

(54) **Optisches Spektrometer mit variabler Bandbreite**

(71) Anmelder: Acterna Eningen GmbH, 72800 Eningen (DE)
(72) Erfinder: Fuhrmann, Thomas, Dipl.-Ing., 72800 Eningen (DE)
(74) Vertreter: KOHLER SCHMID + PARTNER

(57) **Zusammenfassung**

Bei einem optischen Spektrometer (1) mit einem Beugungsgitter (2), mit einem das einfallende Licht (5) auf das Beugungsgitter (2) abbildenden Eingangsspalt (4), mit einem das am Beugungsgitter (2) gebeugte Licht wellenlängenselektierenden Ausgangsspalt (8) und mit einer Einrichtung zum Variieren der Bandbreite des Spektrometers (1) ist als Einrichtung zum Variieren der Bandbreite ein optisches Element (11), z.B. eine variable Blende, im Strahlengang zwischen dem Eingangsspalt (4) und dem wellenlängenselektierenden Ausgangsspalt (8) angeordnet, das die Fleckgröße des gebeugten Lichts am Ausgangsspalt verändert. Die Bandbreite der durch den Ausgangsspalt durchgelassenen Wellenlängenanteile, d.h. die Bandbreite des Spektrometers, wird durch unterschiedliche spektrale Auflösungen des Beugungsgitters variiert.

## Beschreibung

Die Erfindung betrifft ein optisches Spektrometer mit einem Beugungsgitter, mit einem das einfallende Licht auf das Beugungsgitter abbildenden Eingangsspalt, mit einem das am Beugungsgitter gebeugte Licht wellenlängenselektierenden Ausgangsspalt und mit einer Einrichtung zum Variieren der Band-breite des Spektrometers.

Ein derartiges optisches Spektrometer ist beispielsweise durch die EP 0 540 966 B1 bekanntgeworden.

Bei diesem bekannten optischen Spektrometer richtet eine Eingangslichtleitfaser das einfallende Licht durch eine erste Optik auf ein drehbares Beugungsgitter, wobei die Eingangslichtleitfaser als Eingangsspalt dient. Das Beugungsgitter beugt das Licht, wodurch das Licht in seine Wellenlängenanteile zerlegt wird. Das räumlich zerlegte Licht wird durch eine zweite Optik auf einen als räumliches Filter für das gebeugte Licht wirkenden Ausgangsspalt gerichtet, so daß nur der in den passenden Raumwinkel gebeugte Wellenlängenanteil durchgelassen wird. Die Bandbreite der durchgelassenen Wellenlängenanteile, d.h. die Bandbreite des Spektrometers, wird durch die Verwendung unterschiedlich breiter Ausgangsspalte variiert.

Allerdings ist ein variabler Ausgangsspalt nicht immer erwünscht, z.B. wenn das Licht in eine Singlemode-Faser eingekoppelt werden soll. Der Ausgangsspalt kann zwar, wie bei der EP 0 540 966 B1, auch in einer Zwischenbildebene angeordnet sein, jedoch erfordert dies einen erheblichen Aufwand an Optik und Teilen.

Es ist daher die Aufgabe der Erfindung, bei einem optischen Spektrometer der eingangs genannten Art die Bandbreite des Spektrometers auf andere Art und Weise verändern zu können.

Diese Aufgabe wird erfindungsgemäß dadurch gelöst, daß als Einrichtung zum Variieren der Bandbreite ein optisches Element im Strahlengang angeordnet ist, das die Fleckgröße des gebeugten Lichts am Ausgangsspalt verändert.

Der mit der Erfindung erzielte Vorteil besteht darin, daß mit dem optischen Element der Querschnitt des auf das Beugungsgitter auftreffenden Lichts oder des am Beugungsgitter gebeugten Lichts geändert werden kann. Da die spektrale Auflösung des Beugungsgitters proportional zur Anzahl seiner beleuchteten Gitterlinien ist, wird über das-optische Element die Gitterauflösung beeinflußt. Je kleiner die Blendenöffnung, desto weniger Gitterlinien werden beleuchtet, und desto geringer ist die Gitterauflösung. Erfindungsgemäß wird die Bandbreite der durch den Ausgangsspalt durchgelassenen Wellenlängenanteile, d.h. die Bandbreite des Spektrometers, durch unterschiedliche spektrale Auflösungen des Beugungsgitters variiert. Das Beugungsgitter kann z.B. ein planes oder ein konkav gekrümmtes, drehbares Reflexionsgitter sein.

Die Bandbreite eines Spektrometer sollte zur genauen Vermessung eines Spektrums möglichst schmal sein, vorzugsweise kleiner als 0,1 nm im Wellenlängenbereich um 1550 nm. Zum Filtern eines optischen Signals wird eine größere Bandbreite als bei einem Spektrometer gefordert, um bei einem frequenzmodulierten optischen Signal auch Seitenbänder durchzulassen. Im Wellenlängenbereich um 1550 nm liegt die gewünschte Filterbandbreite für ein Signal mit 10 Gbit/s bei etwa 0,16 nm. Ist die Filterbandbreite zu schmal, werden die Seitenbänder weggefiltert, und die Bitfehlerrate erhöht sich allein durch die Filterung, was jedoch nicht erwünscht ist.

Das optische Element kann an beliebiger Stelle im Strahlengang des Lichts angeordnet sein, wobei der Lichtstrahl am optischen Element bereits so weit aufgeweitet sein sollte, daß am optischen Element keine wesentlichen Beugungseffekte mehr auftreten. Bevorzugt ist das optische Element entweder zwischen einer das Licht auf das Beugungsgitter abbildenden ersten Optik und dem Beugungsgitter oder zwischen dem Beugungsgitter und einer das gebeugte Licht auf den Ausgangsspalt abbildenden zweiten Optik angeordnet.

Vorzugsweise greift das optische Element in einen Parallel- strahl ein, aber das Licht kann auf das optische Element auch als konvergenter oder divergenter Lichtstrahl gerichtet sein.

Bei besonders bevorzugten Ausführungsformen der Erfindung sind der Eingangsspalt und/oder der Ausgangsspalt jeweils durch eine Lichtleitfaser, vorzugsweise Singlemode-Faser, gebildet, so daß eine variable Bandbreite auch bei optischen Spektrometern mit Singlemode-Fasereingang und/oder Singlemode-Faserausgang ermöglicht wird.

Vorzugsweise ist das optische Element eine im Strahlengang zwischen Eingangsspalt und Ausgangsspalt angeordnete variable Blende. Je kleiner die Blendenöffnung, desto weniger Gitterlinien werden beleuchtet, und desto geringer ist die Gitterauflösung. Wenn die Blendenöffnung der variablen Blende verkleinert wird, sinkt die Auflösung des Beugungsgitters, d.h., die Bandbreite des erfindungsgemäßen Spektrometers erhöht sich entsprechend. Daher kann das erfindungsgemäße Spektrometer durch Variieren der Blendenöffnung alternativ auch als optisches Filter benutzt werden. Idealerweise ist die Blendenöffnung zwischen mindestens zwei voreingestellten Öffnungsdurchmessern, also zwischen zwei Bandbreiten, umschaltbar.

Die variable Blende kann durch eine Blende mit verstellbarer Blendenöffnung oder durch eine in den Strahlengang des Lichts einführbare Blende gebildet sein. Das Verstellen der Blendenöffnung kann manuell oder von einer Steuereinrichtung gesteuert erfolgen.

Anstelle einer Blende kann als optische Element beispielsweise auch eine im Strahlengang zwischen Eingangsspalt und Ausgangsspalt angeordnete Linse oder eine im divergenten oder konvergenten Lichtstrahl angeordnete planparallele Platte verwendet werden, um den Fokus des Lichtstrahls am Ausgangsspalt relativ zum Ausgangsspalt zu defokussieren und so die Bandbreite des Spektrometers zu verändern.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebene Ausführungsformen sind nicht als abschließende Aufzählung zu verstehen, sondern haben vielmehr beispielhaften Charakter für die Schilderung der Erfindung.

Es zeigt:
- Fig. 1: schematisch ein erstes Ausführungsbeispiel des erfindungsgemäßen Spektrometers; und
- Fig. 2: schematisch ein zweites Ausführungsbeispiel des erfindungsgemäßen Spektrometers.

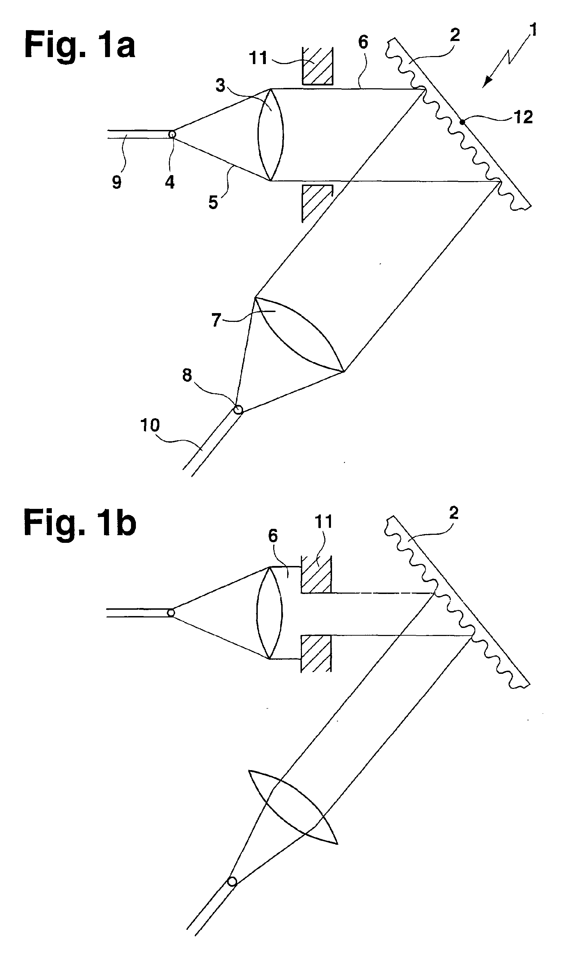

Das in **Fig. 1** gezeigte optische Spektrometer **1** umfaßt ein drehbares Beugungsgitter **2**, eine erste Optik **3** in Form einer bikonvexen Sammellinse, die das durch einen Eingangsspalt **4** einfallende Licht **5** als Parallelstrahl **6** auf das Beugungsgitter 2 abbildet, und eine zweite Optik **7** in Form einer bikonvexen Sammellinse, die das am Beugungsgitter 2 gebeugte Licht auf einen wellenlängenselektierenden Ausgangsspalt **8** abbildet. Der Eingangsspalt **4** und der Ausgangsspalt 8 sind jeweils durch die Austrittsfläche bzw. die Eintrittsfläche einer Lichtleitfaser **9, 10** gebildet. Am Beugungsgitter 2 wird das auftreffende Licht räumlich in seine Wellenlängenanteile zerlegt, wobei nur die unter dem richtigen Einfallswinkel auf den Ausgangsspalt 8 abgebildeten Wellenlängenanteile in die Lichtleitfaser 10 eingekoppelt werden. Durch Drehen des Beugungsgitters 2 um die Drehachse **12** können jeweils unterschiedliche Wellenlängenanteile in die Lichtleitfaser 10 eingekoppelt werden.

Im Parallelstrahl 6 zwischen erster Optik 3 und Beugungsgitter 2 ist ein als variable Blende ausgebildetes optisches Element **11** mit verstellbarer Blendenöffnung angeordnet. Da die spektrale Auflösung des Beugungsgitters 2 proportional zur Anzahl seiner beleuchteten Gitterlinien ist, läßt über die variable Blende 11 die spektrale Auflösung des Beugungsgitters 2 beeinflussen. In der Einstellung nach Fig. 1a greift die Blende 11 in den Parallelstrahl 6 nicht ein, so daß die Anzahl der beleuchteten Gitterlinien und die Auflösung des Beugungsgitters 2 maximal sind und entsprechend die Wellenlängenbandbreite des am Ausgangsspalt 8 durchgelassenen Lichts minimal ist. In der Einstellung nach Fig. 1b schränkt die Blende 11 den Parallelstrahl 6 ein, so daß weniger Gitterlinien beleuchtet werden. Daher ist die Auflösung des Beugungsgitters 2 geringer und die Wellenlängenbandbreite des am Ausgangsspalt 8 durchgelassenen Lichts entsprechend größer.

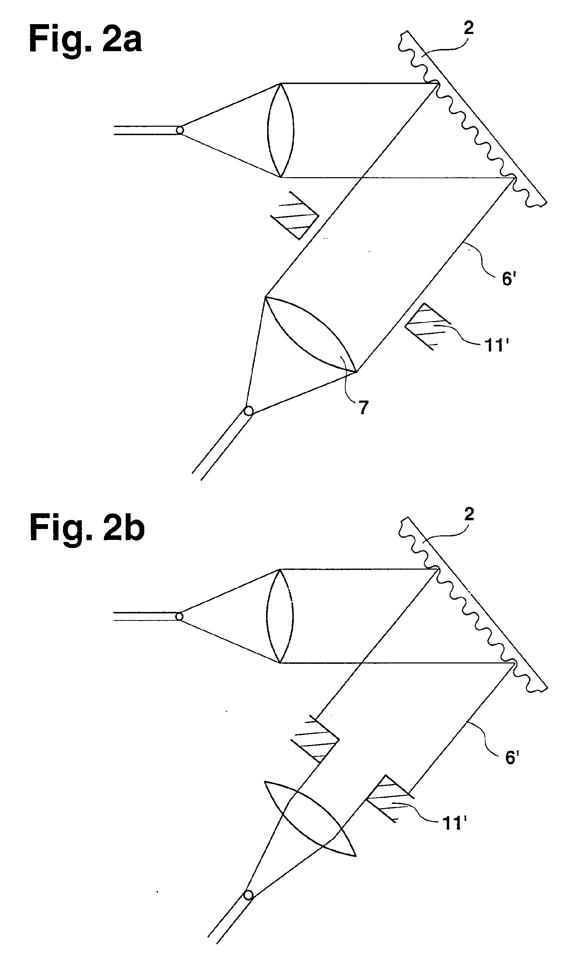

Bei dem in **Fig. 2** gezeigten optischen Spektrometer ist die variable Blende 11' im Parallelstrahl 6' zwischen Beugungsgitter 2 und zweiter Optik 7 angeordnet. Bei offener Blende 11' (Fig. 2a) ist die Bandbreite des Spektrometers 1 minimal, während bei der in den Parallelstrahl 6' eingreifenden Blende 11' (Fig. 2b) die Bandbreite des Spektrometers entsprechend höher ist.

Durch Variation der Blendenöffnung kann das optische Spektrometer 1 alternativ auch als optisches Filter mit höherer Bandbreite benutzt werden. Idealerweise ist die variable Blende 11, 11' zwischen mindestens zwei Öffnungsdurchmessern, also zwischen zwei Bandbreiten, umschaltbar, und zwar entweder manuell oder von einer Steuereinrichtung angetrieben.

In der nachfolgenden Tabelle sind exemplarische Daten aufgelistet, die mit einem Prototyp eines optischen Spektrumanalysators der Fa. Wavetek Wandel Goltermann GmbH bei verschiedenen Blendenbreiten im Wellenlängenbereich um 1550 nm gemessen worden sind. In diesem Wellenlängenbereich entspricht 1 nm recht genau 125 GHz.

**Tabelle:**

| Blendenbreite [mm] | Bandbreite [nm] | Zusatzdämpfung [dB] | Filterdämpfung bei 0,4 nm Abstand [dB] |
|---|---|---|---|
| 12 | 0,07 | 0 | 38 |
| 8 | 0,08 | 0,11 | 37 |
| 6 | 0,1 | 0,98 | 27 |
| 4 | 0,12 | 2,27 | 22 |
| 2 | 0,22 | 6,4 | 15 |

Die Bandbreite ist die 3dB-Bandbreite des Durchlaßbereichs des Spektrometers, d.h., die Bandbreite zwischen den Punkten, bei denen die Leistung halbiert ist. Die Zusatzdämpfung gibt die durch die Blende verursachte Dämpfung an. Die Filterdämpfung bei 0,4 nm Abstand gibt an, wie stark der Nachbarkanal in einem Mehrkanalsystem mit einem Kanalabstand von 50 GHz (0,4 nm) gedämpft wird. Überlicherweise wird eine minimale Dämpfung von 20 dB gefordert. Die gewünschte Filterbandbreite bei einem Signal mit 10 Gbit/s ist ca. 0,16 nm. Schmalere Filter funktionieren auch noch. Aber je schmaler ein Filter ist, desto stärker wird das Signal verformt, und die Bitfehlerrate steigt allein durch die Filterung an, was jedoch nicht erwünscht ist.

Bei einem optischen Spektrometer (1) mit einem Beugungsgitter (2), mit einem das einfallende Licht (5) auf das Beugungsgitter (2) abbildenden Eingangsspalt (4), mit einem das am Beugungsgitter (2) gebeugte Licht wellenlängenselektierenden Ausgangsspalt (8) und mit einer Einrichtung zum Variieren der Bandbreite des Spektrometers (1) ist als Einrichtung zum Variieren der Bandbreite ein optisches Element (11), z.B. eine variable Blende, im Strahlengang zwischen dem Eingangsspalt (4) und dem wellenlängenselektierenden Ausgangsspalt (8) angeordnet, das die Fleckgröße des gebeugten Lichts am Ausgangsspalt verändert. Die Bandbreite der durch den Ausgangsspalt durchgelassenen Wellenlängenanteile, d.h. die Bandbreite des Spektrometers, wird durch unterschiedliche spektrale Auflösungen des Beugungsgitters variiert.

## Patentansprüche

1. Optisches Spektrometer (1) mit einem Beugungsgitter (2), mit einem das einfallende Licht (5) auf das Beugungsgitter (2) abbildenden Eingangsspalt (4), mit einem das am Beugungsgitter (2) gebeugte Licht wellenlängenselektierenden Ausgangsspalt (8) und mit einer Einrichtung zum Variieren der Bandbreite des Spektrometers (1),
**dadurch gekennzeichnet,**
**daß** als Einrichtung zum Variieren der Bandbreite ein optisches Element (11; 11') im Strahlengang angeordnet ist, das die Fleckgröße des gebeugten Lichts am Ausgangsspalt (8) verändert.

2. Optisches Spektrometer nach Anspruch 1, **dadurch gekennzeichnet, daß** das optische Element (11) zwischen einer das Licht (5) auf das Beugungsgitter (2) abbildenden ersten Optik (3) und dem Beugungsgitter (2) angeordnet ist.

3. Optisches Spektrometer nach Anspruch 1, **dadurch gekennzeichnet, daß** das optische Element (11') zwischen dem Beugungsgitter (2) und einer das gebeugte Licht auf den Ausgangsspalt (8) abbildenden zweiten Optik (7) angeordnet ist.

4. Optisches Spektrometer nach einem der vorhergehenden Ansprüche, **dadurch gekennzeichnet, daß** das Licht auf das optische Element als konvergenter oder divergenter Lichtstrahl gerichtet ist.

5. Optisches Spektrometer nach einem der Ansprüche 1 bis 3, **dadurch gekennzeichnet, daß** die erste Optik (3) das Licht (5) auf das optische Element (11; 11') als Parallelstrahl (6; 6') richtet.

6. Optisches Spektrometer nach einem der vorhergehenden Ansprüche, **dadurch gekennzeichnet, daß** der Eingangsspalt (4) und/oder der Ausgangsspalt (8) jeweils durch eine Lichtleitfaser (9, 10), vorzugsweise Singlemode-faser, gebildet sind.

7. Optisches Spektrometer nach einem der vorhergehenden Ansprüche, **dadurch gekennzeichnet, daß** das optische Element (11; 11') eine im Strahlengang zwischen Eingangsspalt (4) und Ausgangsspalt (8) angeordnete variable Blende ist.

8. Optisches Spektrometer nach Anspruch 7, **dadurch gekennzeichnet, daß** die variable Blende durch eine Blende mit verstellbarer Blendenöffnung gebildet ist.

9. Optisches Spektrometer nach Anspruch 7, **dadurch gekennzeichnet, daß** die variable Blende durch eine in den Strahlengang des Lichts einführbare Blende gebildet ist.

10. Optisches Spektrometer nach einem der Ansprüche 1 bis 6, **dadurch gekennzeichnet, daß** das optische Element (11; 11') eine im Strahlengang zwischen Eingangsspalt (4) und Ausgangsspalt (8) angeordnete Linse oder eine im divergenten oder konvergenten Lichtstrahl angeordnete planparallele Platte ist, die den Fokus des Lichtstrahls am Ausgangsspalt (8) relativ zum Ausgangsspalt (8) defokussiert.
